# EUROPEAN PATENT SPECIFICATION

(11) **EP 2 740 068 B1**
(45) Date of publication and mention of the grant of the patent: **24.04.2019**
(21) Application number: 11870779.3
(22) Date of filing: 11.10.2011
(51) Int. Cl.: G06F 21/36, H04L 29/06

(54) **METHOD AND APPARATUS FOR INPUTTING PASSWORD USING GAME**
VORRICHTUNG UND VERFAHREN ZUR PASSWORTEINGABE MITHILFE EINES SPIELS
PROCÉDÉ ET APPAREIL D'ENTRÉE DE MOT DE PASSE À L'AIDE D'UN JEU

(30) Priority: 05.08.2011 KR 20110078259
(43) Date of publication of application: 11.06.2014
(73) Proprietor: Neople, Inc., Gangnam-gu Seoul 135-873 (KR)
(72) Inventor: YOO, Dong Kyu, Seoul 135-873 (KR)
(74) Representative: Klunker IP Patentanwälte PartG mbB
(86) International application number: PCT/KR2011/007499
(87) International publication number: WO 2013/022146

(56) References cited:
- WO-A2-2009/145540
- JP-A- 10 097 500
- KR-A- 20020 002 231
- KR-A- 20080 054 636
- US-A- 5 559 961
- ALEXANDER DE LUCA ET AL: "ColorPIN", PROCEEDINGS OF THE 28TH INTERNATIONAL CONFERENCE ON HUMAN FACTORS IN COMPUTING SYSTEMS, CHI '10, 1 January 2010 (2010-01-01), page 1103, XP55172524, New York, New York, USA DOI: 10.1145/1753326.1753490 ISBN: 978-1-60-558929-9
- Alice Boit et al: "A Random Cursor MAtrix to Hide Graphical Password Input", , 3 August 2009 (2009-08-03), XP002737596, ISBN: 978-1-60558-726-4 Retrieved from the Internet: URL:http://dl.acm.org/citation.cfm?id=1599 342 [retrieved on 2015-03-19]
- WIEDENBECK SUSAN ET AL: "Design and Evaluation of a Shoulder-Surfing Resistant Graphical Password Scheme", AVI'06, 23 May 2006 (2006-05-23), - 26 May 2006 (2006-05-26), pages 177-184, XP040039692, Venezia, Italy

## Description

### Technical Field

The present invention relates to a method and apparatus for inputting a password using a game.

### Background Art

WO 2009/145540 A2 teaches an apparatus and method for inputting a password using a game. The method includes displaying, on a display unit, a password image corresponding to at least one password information, amongst others.

In accordance with development of information communication and Internet technologies, tasks that had been generally performed offline can now be easily and rapidly completed through online services. For example, a financial institution such as a bank and the like can process all banking tasks online. Also, a government office can request a related document online, and can issue the requested document online.

However, an online service such as a financial service, the document request of the government office, or the like should be accompanied with a corresponding security system.

Generally, in a passpad scheme used in a financial business or a game business, spyware is able to take a screen shot and coordinates of a mouse by detecting mouse clicks and thus, a password is likely to be hacked by sending the result to a server of a predetermined e-mail address, and the like.

Considering the foregoing, in a method of inputting a password, a screen where a password is input may be changed in order to increase a security against hacking through a screen shot.

However, the scheme of changing the screen and the like is also likely to be hacked by transmitting numerous amounts of data, and by compiling statistics and analyzing the received data.

### Disclosure of Invention

### Technical Problem

According to embodiments of the present invention, a user may have fun inputting a password using a game.

According to embodiments of the present invention, a risk of hacking may be reduced by changing a location where a password is generated, each time the password is input during a game.

According to embodiments of the present invention, a probability of taking a screen shot of an input screen may decrease and a security for inputting a password may increase, by employing a password multi-input scheme in which one of group password images may be re-selected.

### Solution to Problem

According to an aspect of the present invention, there is provided an apparatus for inputting a password using a game, the apparatus including a password image display unit to display at least one group password image including at least one password image, in at least one region of a display device, a receiving unit to receive at least one piece of motion information from an external input device, a character image display unit to display, on the display device, a character image that may move based on the at least one piece of motion information, a determination unit to determine which of the at least one group password image the character image contacts, and to determine which of at least one password image included in the contacted group password image is selected when a contact takes place as a result of the determination, and an authentication unit to control a user authentication procedure to be performed based on password information corresponding to the selected password image.

The determination unit may determine that the character image contacts the group password image when coordinates of the character image match coordinates of the group password image.

The determination unit may determine that a password image positioned in a direction corresponding to the at least one piece of motion information is selected from the matched coordinates.

According to another aspect of the present invention, there is provided a method of inputting a password using a game, the method including displaying at least one group password image including at least one password image, in at least one region of a display device, receiving at least one piece of motion information from an external input device, displaying, on the display device, a character image that may move based on the at least one piece of motion information, determining which of the at least one group password image the character image contacts, determining which of at least one password image included in the contacted group password image is selected when a contact takes place as a result of the determination, and controlling a user authentication procedure to be performed based on password information corresponding to the selected password image.

The determining of which of the at least one group password image the character image contacts may include determining that the character image contacts the group password image when coordinates of the character image match coordinates of the group password image.

The determining of which of at least one password image included in the contacted group password image is selected may include determining that a password image positioned in a direction corresponding to the at least one piece of motion information is selected in the matched coordinates.

### Brief Description of Drawings

FIG. 1 is a block diagram illustrating a configuration of an apparatus for inputting a password using a game according to an embodiment of the present invention.
FIG. 2 is a diagram illustrating an example of a password input game according to an embodiment of the present invention.
FIGS. 3 and 4 are diagrams illustrating examples of moving a character image in a password input game according to an embodiment of the present invention.
FIG. 5 is a diagram illustrating an example of a process of inputting a password in a password input game according to an embodiment of the present invention.
FIG. 6 is a flowchart illustrating a method of inputting a password using a game according to an embodiment of the present invention.

### Mode for the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

When it is determined that a detailed description is related to a related known function or configuration which may make the purpose of the present invention unnecessarily ambiguous in the description of the present invention, such detailed description will be omitted, for conciseness. Also, terminologies used herein are defined to appropriately describe the exemplary embodiments of the present invention and thus may be changed depending on a user, the intent of an operator, or a custom. Accordingly, the terminologies must be defined based on the following overall description of this specification.

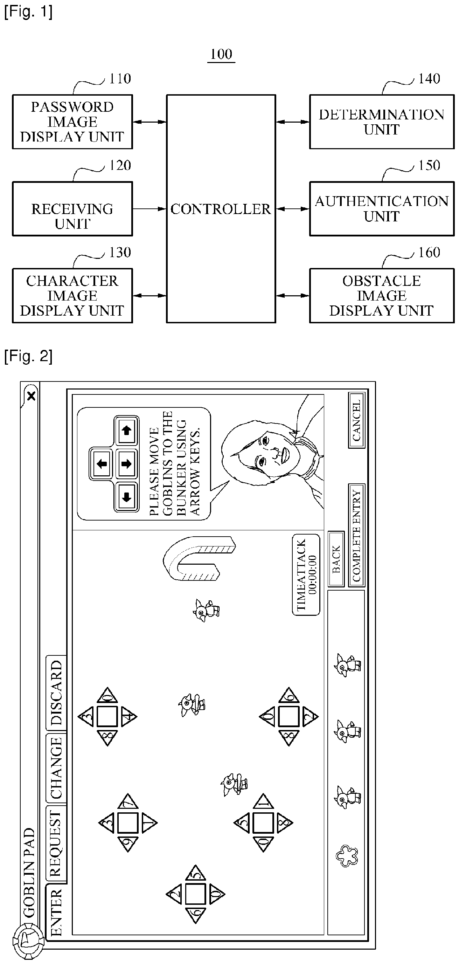

FIG. 1 is a block diagram illustrating a configuration of an apparatus 100 for inputting a password using a game according to an embodiment of the present invention.

The apparatus 100 may include a password image display unit 110, a receiving unit 120, a character image display unit 130, a determination unit 140, and an authentication unit 150.

As a technology is applied to an online security authentication service, the apparatus 100 may be applied to various password input services, for example, a password input service of a bank or a government office, a service provided online, and the like.

Herein, an apparatus and method for inputting a password using a game will be described by way of examples for ease of description. The apparatus and method may be applied to an online game. When the present invention is applied to an online game, it may be performed during a log-in process in the online game, and may also be performed while playing the online game.

The method may be performed when a user requests a corresponding service, or may be provided to the user as an essential service provided by each service provider.

The apparatus 100 will be described sequentially with reference to FIGS. 1 through 4 based on a manner in which a user uses a service.

The password image display unit 110 may display at least one group password image including at least one password image, in at least one region of a display device.

FIG. 2 is a diagram illustrating an example of a password input game according to an embodiment of the present invention.

Referring to FIG. 2, at least one group password image may be generated by classifying four password images into one group. Here, the four password images may have four different numbers among numbers from 0 to 9. The password image display unit 110 may display, in at least one region, one or a plurality of group password images in which the four different password images are classified into one group.

In this instance, password information included in the password images may be set to numbers from 0 to 9, or may be changed to a password including characters and the like according to a setting.

The password information may be converted to a password image and provided in order to prevent a risk of hacking. That is, a conventional password in a textual form may be easily hacked when hackers track a program. However, the password information according to an embodiment of the present invention may be provided in a form of image, whereby the risk of hacking may be reduced.

Each of the at least one group password image may not be displayed sequentially based on a predetermined pattern, but may be displayed randomly. Accordingly, a risk of hacking through an analysis of a password image generated in a fixed location may be reduced.

For example, a security of inputting a password may be further enhanced by changing a display location of a group password image in a pattern different from the pattern illustrated in FIG. 2.

The receiving unit 120 may receive at least one piece of motion information from an external input device.

The character image display unit 130 may display, on the display device, a character image that may move based on the at least one piece of motion information.

The character image display unit 130 may display the character image to be fixed when a contact takes place as a determination result.

The apparatus 100 may display at least one obstacle image on the display device using an obstacle image display unit 160.

The at least one obstacle image may be disposed to be fixed, or may be displayed to be mobile at every time when the at least one obstacle image is generated, whereby a route of the character image may be induced to be changed each time.

The apparatus 100 may move the character image using various devices such as a keyboard, a mouse, and the like, as the external input device. In particular, when compared to the mouse, it may be more difficult to identify a route of the character image if the keyboard is used, and accordingly a security level may be increased.

The apparatus 100 may employ a scheme in which the character image that is directly controlled by the user may be disposed, the character image may be moved to the group password image, and one of a plurality of password images included in the group password image may be selected. Accordingly, a risk of hacking may decrease since a route of the character image may vary by moving the character image controlled by the user to the password image without contacting the at least one obstacle image disposed, and also the selected password image may not be displayed on a screen.

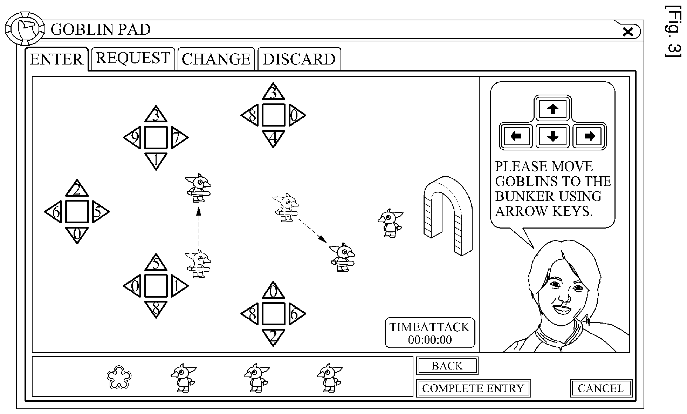

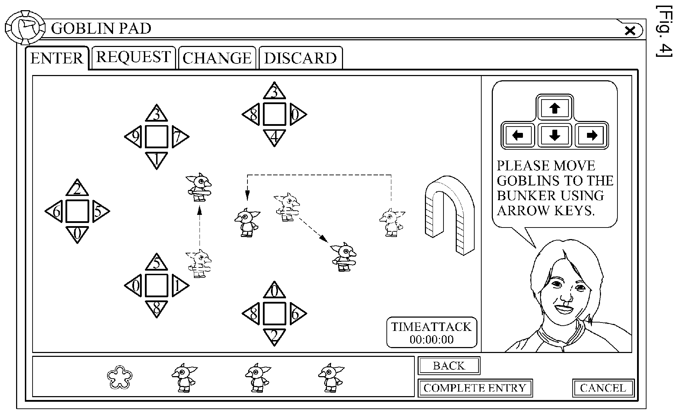

FIGS. 3 and 4 are diagrams illustrating examples of moving a character image in a password input game according to an embodiment of the present invention.

Referring to FIGS. 3 and 4, the at least one obstacle image may be displayed to be fixed at a location where the at least one obstacle image is initially displayed, or to be mobile depending on a predetermined setting. Accordingly, the user may have fun while playing the game, and a security level may also increase by changing the route of the character image.

The determination unit 140 may determine which of the at least one group password image the character image contacts.

The determination unit 140 may determine that the character image contacts the group password image when coordinates of the character image match coordinates of the group password image. The determination unit 140 may perform the determination by identifying, using the coordinates, whether the character image contacts the group password image, and also by applying various algorithms based on image combination.

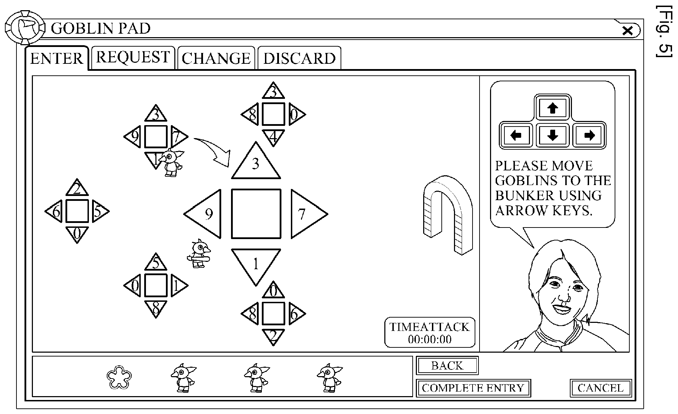

FIG. 5 is a diagram illustrating a process of inputting a password in a password input game according to an embodiment of the present invention.

Referring to FIG. 5, the password image display unit 110 may display the group password image to be enlarged when the coordinates of the character image match the coordinates of the group password image as a result of the determination.

The determination unit 140 may determine which of at least one password image included in the contacted group password image is selected when a contact takes place as a result of the determination.

The determination unit 140 may determine that a password image positioned in a direction corresponding to the at least one piece of motion information is selected from the matched coordinates.

The authentication unit 150 may control a user authentication procedure to be performed based on password information corresponding to the selected password image.

The password information may be at least one character. The aforementioned process may be repeatedly performed a number of times corresponding to a number of characters included in the password information.

The password image display unit 110 may display the at least one group password image by resetting the at least one group password image a number of times corresponding to a number of characters included in the password information.

In this instance, the authentication unit 150 may control the user authentication procedure to be performed, by updating password information corresponding to the selected password image a number of times corresponding to a number of characters included in the password information.

The character image display unit 130 may repeatedly display the character image a number of times corresponding to a number of characters included in the password information. Here, the character image may move based on the at least one piece of motion information.

For example, when predetermined password information corresponds to a four-digit number, the aforementioned process may be repeated four times, and the user authentication procedure may be completed when the corresponding password information is accurately input each time.

When the password is input four times for a user authentication as abovementioned, password may be prevented from being tracked based on a movement of the character image, by changing a rate at which the character image is displayed on the display device. Here, the character image may move based on the at least one piece of motion information received from the external input device.

When the character image contacts the at least one obstacle image during a process of moving the character image, the character image may be displayed by moving the character image a predetermined distance away from the at least one obstacle image, or by freezing the character image during a predetermined time period.

As an example, the determination unit 140 may determine whether the character image contacts the at least one obstacle image, and may control the character image to be displayed by moving the character image a predetermined distance away from the at least one obstacle image when the character image contacts the at least one obstacle image.

As another example, the determination unit 140 may control the character image to be displayed by freezing the character image during a predetermined time period when the character image contacts the at least one obstacle image.

In this instance, the determination unit 140 may determine that the character image contacts the at least one obstacle image when coordinates of the character image match coordinates of the at least one obstacle image. Also, the determination may be performed based on another algorithm related to an image contact, as aforementioned.

When motion information of the character image is not received through the external input device during a predetermined time period, the character image may be rearranged so that the aforementioned process may be newly performed.

The apparatus 100 may provide points to a user who completes the user authentication procedure using a point providing unit (not shown) when the user authentication procedure is completed within a predetermined time.

For example, the apparatus 100 may provide points to a user terminal which completes the user authentication procedure when an operation of controlling the user authentication procedure to be performed based on password information corresponding to the contact password image is completed within a predetermined time.

The apparatus 100 may encourage use of the method of inputting a password using a game by providing points, rewards, or the like to the user when the user completes inputting a password using a game within a time limit.

As aforementioned, the user may have fun inputting a password through a game using the apparatus 100. Also, a security level of a password may be increased through a diversity of a route for moving a character image to a group password image, and a password selectivity of selecting one of a plurality of password images included in the group password image.

The method of inputting a password using a game will be described sequentially based on a functional aspect of a configuration of the apparatus 100.

In this instance, the method may conform to a method of using the apparatus 100, and accordingly may include all functional elements of the apparatus 100. Thus, a detailed description will be omitted for conciseness, and a description will be briefly described.

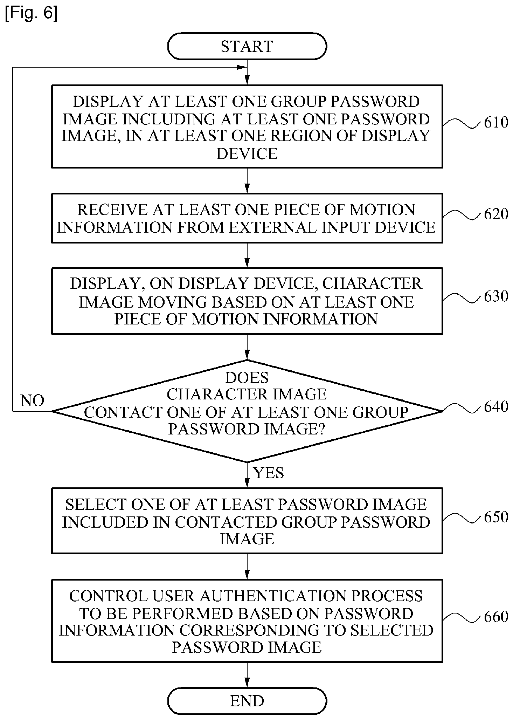

FIG. 6 is a flowchart illustrating a method of inputting a password using a game according to an embodiment of the present invention.

In operation 610, the apparatus 100 may display at least one group password image including at least one password image, in at least one region of a display device.

In operation 620, the apparatus 100 may receive at least one piece of motion information from an external input device.

In operation 630, the apparatus 100 may display, on the display device, a character image that may move based on the at least one piece of motion information.

In operation 640, the apparatus 100 may determine which of the at least one group password image the character image contacts.

In operation 650, the apparatus 100 may determine which of at least one password image included in the contacted group password image is selected when a contact takes place as a result of the determination.

In operation 660, the apparatus 100 may control a user authentication procedure to be performed based on password information corresponding to the selected password image.

The above-described embodiments of the present invention may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

Although a few embodiments of the present invention have been shown and described, the present invention is not limited to the described embodiments. Instead, it would be appreciated by those skilled in the art that changes may be made to these embodiments.

## Claims

1. An apparatus (100) for inputting a password using a game, the apparatus comprising:
a password image display unit (110) to display a plurality of different group password images, each including different password images, in at least one region of a display device;
a receiving unit (120) to receive at least one piece of motion information from an external input device;
a character image display unit (130) to display, on the display device, a character image that moves based on the at least one piece of motion information;
a determination unit (140) to determine which of the plurality of group password images the character image contacts, and to determine which of said password images included in the contacted group password image is selected when a contact takes place as a result of the determination; and
an authentication unit (150) to control a user authentication procedure to be performed based on password information corresponding to the selected password image.

2. The apparatus (100) of claim 1, wherein the determination unit (140) determines that the character image contacts the group password image when coordinates of the character image match coordinates of the group password image.

3. The apparatus (100) of claim 2, wherein the determination unit (140) determines that a password image positioned in a direction corresponding to the at least one piece of motion information is selected from the matched coordinates.

4. The apparatus (100) of claim 1, wherein the character image display unit (130) displays the character image to be fixed when a contact takes place as a result of the determination.

5. The apparatus (100) of claim 1, wherein the password information is at least one character.

6. The apparatus (100) of claim 5, wherein the password image display unit (110) displays the plurality of group password images by resetting the plurality of group password images a number of times corresponding to a number of characters included in the password information.

7. The apparatus (100) of claim 5, wherein the character image display unit (130) repeatedly displays the character image, that moves based on the at least one piece of motion information, and a number of times corresponding to a number of characters included in the password information.

8. The apparatus (100) of claim 1, further comprising:
an obstacle image display unit (160) to display at least one obstacle image on the display device.

9. The apparatus (100) of claim 8, wherein the determination unit (140) determines whether the character image contacts the at least one obstacle image.

10. The apparatus (100) of claim 9, wherein the determination unit (140) controls the character image to be displayed by moving the character image a predetermined distance away from the at least one obstacle image when the character image contacts the at least one obstacle image.

11. The apparatus (100) of claim 9, wherein the determination unit (140) determines that the character image contacts the at least one obstacle image when coordinates of the character image match coordinates of the at least one obstacle image.

12. The apparatus (100) of claim 8, wherein the at least one obstacle image is displayed to be fixed or to be mobile.

13. The apparatus (100) of claim 1, further comprising:
a point providing unit to provide points to a user who completes the user authentication procedure when the user authentication procedure is completed within a predetermined time.

14. A method of inputting a password using a game, the method comprising:
Displaying (610) a plurality of different group password images, each including different password images, in at least one region of a display device;
Receiving (620) at least one piece of motion information from an external input device;
Displaying (630), on the display device, a character image that moves based on the at least one piece of motion information;
Determining (640) which of the plurality of group password images the character image contacts;
Determining (650) which of at least one password image included in the contacted group password image is selected when a contact takes place as a result of the determination; and
Controlling (660) a user authentication procedure to be performed based on password information corresponding to the selected password image.

15. A non-transitory computer-readable medium comprising a program for instructing a computer to perform the method of claim 14.

## Patentansprüche

1. Eine Vorrichtung (100) zum Eingeben eines Passworts unter Verwendung eines Spiels, wobei die Vorrichtung umfasst:
eine Passwortbildanzeigeeinheit (110) zum Anzeigen einer Vielzahl von verschiedenen Gruppenpasswortbildern, die jeweils unterschiedliche Passwortbilder beinhalten, in mindestens einem Bereich einer Anzeigevorrichtung;
eine Empfangseinheit (120) zum Empfangen von mindestens einer Bewegungsinformation von einer externen Eingabevorrichtung;
eine Zeichenbildanzeigeeinheit (130), um auf der Anzeigevorrichtung ein Zeichenbild anzuzeigen, das sich basierend auf der mindestens einen Bewegungsinformation bewegt;
eine Bestimmungseinheit (140), um zu bestimmen, welches der Vielzahl von Gruppenpasswortbildern das Zeichenbild berührt, und um zu bestimmen, welches der Passwortbilder, die in dem berührenden Gruppenpasswortbild enthalten sind, ausgewählt wird, wenn eine Berührung als Ergebnis der Bestimmung stattfindet; und
eine Authentifizierungseinheit (150) zum Steuern eines Benutzerauthentifizierungsverfahrens, das basierend auf Passwortinformationen, die dem ausgewählten Passwortbild zugeordnet sind, durchzuführen ist.

2. Die Vorrichtung (100) nach Anspruch 1, wobei die Bestimmungseinheit (140) bestimmt, dass das Zeichenbild das Gruppenpasswortbild berührt, wenn Koordinaten des Zeichenbildes mit Koordinaten des Gruppenpasswortbildes übereinstimmen.

3. Die Vorrichtung (100) nach Anspruch 2, wobei die Bestimmungseinheit (140) bestimmt, dass ein Passwortbild, das in einer Richtung positioniert ist, die der mindestens einen Bewegungsinformation entspricht, aus den übereinstimmenden Koordinaten ausgewählt wird.

4. Die Vorrichtung (100) nach Anspruch 1, wobei die Zeichenbildanzeigeeinheit (130) das zu fixierende Zeichenbild anzeigt, wenn eine Berührung als Ergebnis der Bestimmung stattfindet.

5. Die Vorrichtung (100) nach Anspruch 1, wobei die Passwortinformation mindestens ein Zeichen ist.

6. Die Vorrichtung (100) nach Anspruch 5, wobei die Passwortbildanzeigeeinheit (110) die Vielzahl von Gruppenpasswortbildern anzeigt, indem sie die Vielzahl von Gruppenpasswortbildern mehrmals entsprechend einer Anzahl von Zeichen, die in den Passwortinformationen enthalten sind, zurücksetzt.

7. Die Vorrichtung (100) nach Anspruch 5, wobei die Zeichenbildanzeigeeinheit (130) das Zeichenbild, das sich basierend auf der mindestens einen Bewegungsinformation bewegt, wiederholt anzeigt und zwar mehrmals, entsprechend einer Anzahl von Zeichen, die in der Passwortinformation enthalten sind.

8. Die Vorrichtung (100) nach Anspruch 1, die ferner umfasst:
eine Hindernisbildanzeigeeinheit (160), um mindestens ein Hindernisbild auf der Anzeigevorrichtung anzuzeigen.

9. Die Vorrichtung (100) nach Anspruch 8, wobei die Bestimmungseinheit (140) bestimmt, ob das Zeichenbild mit dem mindestens einen Hindernisbild in Berührung steht.

10. Die Vorrichtung (100) nach Anspruch 9, wobei die Bestimmungseinheit (140) das anzuzeigende Zeichenbild steuert, indem sie das Zeichenbild um einen vorbestimmten Abstand von dem mindestens einen Hindernisbild wegbewegt, wenn das Zeichenbild das mindestens eine Hindernisbild berührt.

11. Die Vorrichtung (100) nach Anspruch 9, wobei die Bestimmungseinheit (140) bestimmt, dass das Zeichenbild das mindestens eine Hindernisbild berührt, wenn Koordinaten des Zeichenbildes mit Koordinaten des mindestens einen Hindernisbildes übereinstimmen.

12. Die Vorrichtung (100) nach Anspruch 8, wobei das mindestens eine Hindernisbild als fixiert zu sein oder beweglich zu sein dargestellt wird.

13. Die Vorrichtung (100) nach Anspruch 1, die ferner umfasst:
eine Punktbereitstellungseinheit, um einem Benutzer, der das Benutzerauthentifizierungsverfahren vervollständigt, Punkte bereitzustellen, wenn das Benutzerauthentifizierungsverfahren innerhalb einer vorbestimmten Zeit abgeschlossen ist.

14. Ein Verfahren zur Eingabe eines Passworts unter Verwendung eines Spiels, wobei das Verfahren umfasst:
Anzeigen (610) einer Vielzahl von verschiedenen Gruppenpasswortbildern, die jeweils unterschiedliche Passwortbilder beinhalten, in mindestens einem Bereich einer Anzeigevorrichtung;
Empfangen (620) mindestens einer Bewegungsinformation von einer externen Eingabevorrichtung;
Anzeigen (630) eines Zeichenbildes auf der Anzeigevorrichtung, das sich basierend auf der mindestens einen Bewegungsinformation bewegt;
Bestimmen (640), welches der Vielzahl von Gruppenpasswortbildern das Zeichenbild berührt;
Bestimmen (650), welches von mindestens einem Passwortbild, das in dem berührenden Gruppenpasswortbild enthalten ist, ausgewählt wird, wenn eine Berührung als Ergebnis der Bestimmung stattfindet; und
Steuern (660) eines Benutzerauthentifizierungsverfahrens, das basierend auf Passwortinformationen, die dem ausgewählten Passwortbild zugeordnet sind, durchzuführen ist.

15. Ein nichttransitorisches, computerlesbares Medium, das ein Programm umfasst, um ein Computer anzuweisen, das Verfahren nach Anspruch 14 durchzuführen.

## Revendications

1. Appareil (100) destiné à entrer un mot de passe à l'aide d'un jeu, l'appareil comprenant :
une unité d'affichage d'image de mot de passe (110) pour afficher une pluralité d'images de mot de passe de groupe différentes, chacune incluant différentes images de mot de passe, dans au moins une région d'un dispositif d'affichage ;
une unité de réception (120) pour recevoir au moins un élément d'informations de mouvement à partir d'un dispositif d'entrée externe ;
une unité d'affichage d'image de caractères (130) pour afficher, sur le dispositif d'affichage, une image de caractères qui se déplace sur la base du au moins un élément d'informations de mouvement ;
une unité de détermination (140) pour déterminer quelle image l'image de caractères contacte parmi la pluralité d'images de mot de passe de groupe, et pour déterminer quelle image est sélectionnée parmi lesdites images de mot de passe incluses dans l'image de mot de passe de groupe contactée lorsqu'un contact a lieu en tant que résultat de la détermination, et
une unité d'authentification (150) pour commander une procédure d'authentification d'utilisateur à mettre en oeuvre sur la base des informations de mot de passe correspondant à l'image de mot de passe sélectionnée.

2. Appareil (100) selon la revendication 1, dans lequel l'unité de détermination (140) détermine que l'image de caractères contacte l'image de mot de passe de groupe lorsque les coordonnées de l'image de caractères coïncident avec les coordonnées de l'image de mot de passe de groupe.

3. Appareil (100) selon la revendication 2, dans lequel l'unité de détermination (140) détermine qu'une image de mot de passe positionnée dans une direction correspondant au au moins un élément d'informations de mouvement est sélectionnée parmi les coordonnées ayant coïncidé.

4. Appareil (100) selon la revendication 1, dans lequel l'unité d'affichage d'image de caractères (130) affiche l'image de caractères à fixer lorsqu'un contact a lieu en tant que résultat de la détermination.

5. Appareil (100) selon la revendication 1, dans lequel les informations de mot de passe sont au moins un caractère.

6. Appareil (100) selon la revendication 5, dans lequel l'unité d'affichage d'image de mot de passe (110) affiche la pluralité d'images de mot de passe de groupe en réinitialisant la pluralité d'images de mot de passe de groupe pour un nombre de fois correspondant à un nombre de caractères inclus dans les informations de mot de passe.

7. Appareil (100) selon la revendication 5, dans lequel l'unité d'affichage d'image de caractères (130) affiche de manière répétée l'image de caractères, laquelle se déplace sur la base du au moins un élément d'informations de mouvement, et pour un nombre de fois correspondant à un nombre de caractères inclus dans les informations de mots de passe.

8. Appareil (100) selon la revendication 1, comprenant en outre :
une unité d'affichage d'image d'obstacle (160) pour afficher la au moins une image d'obstacle sur le dispositif d'affichage.

9. Appareil (100) selon la revendication 8, dans lequel l'unité de détermination (140) détermine si l'image de caractères contacte la au moins une image d'obstacle.

10. Appareil (100) selon la revendication 9, dans lequel l'unité de détermination (140) commande l'image de caractères à afficher en déplaçant l'image de caractères l'éloignant à raison d'une distance prédéterminée de la au moins une image d'obstacle lorsque l'image de caractères contacte la au moins une image d'obstacle.

11. Appareil (100) selon la revendication 9, dans lequel l'unité de détermination (140) détermine que l'image de caractères contacte la au moins une image d'obstacle lorsque des coordonnées de l'image de caractères coïncident avec les coordonnées de la au moins une image d'obstacle.

12. Appareil (100) selon la revendication 8, dans lequel la au moins une image d'obstacle est affichée de manière à être fixe ou mobile.

13. Appareil (100) selon la revendication 1, comprenant en outre :
une unité de fourniture de points pour fournir des points à un utilisateur qui finalise la procédure d'authentification d'utilisateur lorsque la procédure d'authentification d'utilisateur est finalisée dans les limites d'un temps prédéterminé.

14. Procédé pour entrer un mot de passe à l'aide d'un jeu, le procédé comprenant les étapes consistant à :
afficher (610) une pluralité d'images de mot de passe de groupe différentes, chacune incluant différentes images de mot de passe, dans au moins une région d'un dispositif d'affichage ;
recevoir (620) au moins un élément d'informations de mouvement à partir d'un dispositif d'entrée externe ;
afficher (630), sur le dispositif d'affichage, une image de caractères qui se déplace sur la base du au moins un élément d'informations de mouvement ;
déterminer (640) quelle image l'image de caractères contacte parmi la pluralité d'images de mot de passe de groupe ;
déterminer (650) quelle image est sélectionnée parmi au moins une image de mot de passe incluse dans l'image de mot de passe de groupe contactée lorsqu'un contact a lieu en tant que résultat de la détermination, et
commander (660) une procédure d'authentification d'utilisateur à mettre en oeuvre sur la base des informations de mot de passe correspondant à l'image de mot de passe sélectionnée.

15. Support d'enregistrement pouvant être lu par ordinateur non transitoire comprenant un programme pour ordonner à un ordinateur de mettre en oeuvre le procédé selon la revendication 14.
